# EUROPÄISCHE PATENTANMELDUNG

(11) **EP 4 438 206 A1**
(43) Veröffentlichungstag der Anmeldung: **02.10.2024**
(21) Anmeldenummer: 23165956.6
(22) Anmeldetag: 31.03.2023
(51) Int. Cl.: B22F 10/28, B33Y 80/00, B01J 8/06, B01J 19/24

(54) **ADDITIV HERGESTELLTER METALLISCHER REAKTOR, KASKADE VON REAKTOREN, VERFAHREN ZUR HERSTELLUNG EINES REAKTORS SOWIE COMPUTERPROGRAMM**

(71) Anmelder: Siemens Aktiengesellschaft, 80333 München (DE)
(72) Erfinder: Kiener, Christoph, 81369 München (DE)
(74) Vertreter: Siemens Patent Attorneys

(57) **Zusammenfassung**

Die Erfindung betrifft einen additiv hergestellten metallischen Reaktor (2) mit einem Gehäuse (4) und mindestens einer in dem Gehäuse (4) angeordneten Rohrleitung (6), wobei das Gehäuse (4) und die Rohrleitung (6) monolithisch miteinander verbunden sind, und das Gehäuse (4) mindestens einen Rohrleitungseinlass (8) und einen Rohrleitungsauslass (10) sowie mindestens einen Rohrleitungsbeschickungszugang (9) aufweist. Die Erfindung zeichnet sich dadurch aus, dass in einem Innenraum (13) des Gehäuses (4) zwischen einer Gehäuseinnenwand (16) und einer Außenwand (12) der Rohrleitung (6) ein mit beiden Wänden monolithisch in Verbindung stehendes Stützgitter (18) angeordnet ist.

## Beschreibung

Die Erfindung betrifft einen additiv hergestellten Reaktor nach Patentanspruch 1, eine Kaskade von Reaktoren nach Patentanspruch 11, ein Verfahren zur Herstellung eines Reaktors oder einer Kaskade nach Patentanspruch 12 sowie ein Computerprogramm.

In der chemischen Verfahrenstechnik werden hochintegrierte, kompakte Reaktoren, die beispielsweise zur Herstellung von Pharmawirkstoffen oder in der Feinchemikaliensynthese aber auch zur Herstellung von Brennstoffen wie Methanol oder Ammoniak oder Dimethylether dienen, zunehmend gebräuchlicher. Derartige kompakte Reaktoren haben insbesondere den Vorteil, dass sie gut bezüglich der Mengenanforderungen skalierbar sind. Es können mit diesen Reaktoren kleine Mengen hergestellt werden, es ist jedoch auch durch entsprechendes Upscaling möglich, Chemieparks zur Massenherstellung von chemischen Verbindungen einzurichten. Derartige Reaktoren werden wie beispielsweise ein Beitrag in dem Magazin Elements der Evonik AG vom 22.08.2022 mit dem Titel "Mikroreaktoren aus dem 3D-Drucker" zeigt, durch additive Herstellungsverfahren gefertigt. Dies hat den Vorteil, dass hoch komplexe Rohrleitungssysteme mit relativ dünnen Wänden in einem monolithischen Bauteil für die Synthese als Reaktor hergestellt werden können.

Insbesondere jedoch bei Anwendung von anspruchsvollen Reaktionen, die auf der einen Seite hohe Drücke und auf der anderen Seite hohe oder extrem niedrige Temperaturen bzw. Temperaturschwankungen aufweisen und die im Lastwechsel betrieben werden sollen, werden die herkömmlichen Reaktoren bezüglich ihrer thermischen und mechanischen Festigkeit an ihre Grenzen geführt.

Die Aufgabe der Erfindung besteht darin, einen additiv hergestellten Reaktor bereitzustellen, der gegenüber dem Stand der Technik eine höhere thermische und mechanische Beständigkeit bei gleich guter oder besserer thermischen Reaktionsführung aufweist.

Die Lösung der Aufgabe besteht in einem additiv hergestellten Reaktor mit den Merkmalen des Patentanspruchs 1, in einer Kaskade von Reaktoren nach Anspruch 12, in einem Verfahren zur Herstellung eines Reaktors nach Anspruch 13 sowie in einem Computerprogramm gemäß Anspruch 15.

Dieser additiv hergestellte metallische Reaktor weist dabei ein Gehäuse und ein mindestens eine in dem Gehäuse angeordnete Rohrleitung auf. Dabei sind das Gehäuse und die Rohrleitung monolithisch miteinander verbunden und das Gehäuse weist mindestens einen Rohrleitungseinlass und einen Rohrleitungsauslass oder zu einer Rohrleitungsbeschickungsöffnung auf. Der Reaktor zeichnet sich dadurch aus, dass in einem Innenraum des Gehäuses zwischen einer Gehäuseinnenwand und der Außenwand der Rohrleitung ein an beiden Wänden monolithisch in Verbindung stehendes Stützgitter angeordnet ist.

Unter dem Begriff monolithisch verbunden bzw. monolithisch gefertigt wird dabei verstanden, dass das beschriebene Bauteil aus einem Stück besteht. Alle Bauteilbestandteile sind ohne Fügeverbindungen vorgefertigter Bauteile ausschließlich durch Materialübergänge, die beispielsweise durch Schmelzvorgänge oder diffusionsgesteuerte Sintervorgänge entstanden sind, miteinander verbunden. Monolithische Bauteile bestehen in der Regel aus einem einzigen Material, beispielsweise aus einer bestimmten Legierung. Je nach additivem Herstellungsverfahren ist es jedoch auch möglich, monolithische Bauteile selektiv mit veränderten Materialzusammensetzungen zu erzeugen.

Somit ist das Gehäuse des Reaktors mit der mindestens einen darin verlaufenden Rohrleitung monolithisch miteinander verbunden. Dies wird durch das additive Herstellungsverfahren zur Herstellung des Reaktors, beispielsweise eines Pulverbettverfahrens (z. B. Laser-Pulverbett Schmelzen) ermöglicht. Die Rohrleitung, die sich in dem Innenraum des Gehäuses erstreckt und in der bei Betrieb des Reaktors eine chemische Reaktion stattfindet, ist jedoch thermisch und mechanisch hoch belastet, da in dem Gehäuse, also in dem Innenraum des Gehäuses, je nach Verfahren hohe Drücke und/oder hohe Temperaturunterschiede oder Temperaturen an sich auftreten. Um diese thermische und mechanische Belastung der Rohrleitung zu verringern und einen sichereren und intensiveren Betrieb des Reaktors zu gewährleisten, ist zwischen der Gehäuseinnenwand und der Außenwand der Rohrleitung ein Stützgitter angeordnet, wobei das Stützgitter ebenfalls monolithisch sowohl mit der Rohrleitung als auch mit dem Gehäuse verbunden ist. Dieses Stützgitter kann bevorzugt auch zwischen zwei Rohrleitungen oder zwischen zwei Segmenten einer einzigen Rohrleitung, wenn diese beispielsweise mäanderförmig verlaufen, angeordnet sein. Auch die monolithische Darstellung des beschriebenen Stützgitters wird durch ein additives Herstellungsverfahren des Reaktors ermöglicht. Dabei kann die Ausrichtung des Stützgitters in einem kartesischen Koordinatensystem variieren. Auch der Querschnitt des Stützgitters kann über den Verlauf der einzelnen Gitterstrukturanteile variieren und einer vorteilhaften Ausgestaltungsform beträgt der Querschnitt des Stützgitters zwischen 2 % und 10 % eines Innendurchmessers der Rohrleitung.

In einer weiteren Ausgestaltungsform der Erfindung ist es zweckmäßig, dass die Rohrleitung an der Außenwand wiederum monolithisch von einem offenporigen metallischen Schaum umgeben ist. Unter dem Begriff offenporigen metallischen Schaum wird dabei ein Gebilde verstanden, das ein hohes Verhältnis von Oberfläche zu Volumen hat und dabei eine offene Porosität aufweist. Der Begriff Schaum wird dabei jedoch nicht in dem Zusammenhang gesehen, wie er beim gasförmigen Aufschäumen einer Substanz verwendet wird. Vielmehr werden darunter alle offenporigen Gebilde verstanden, die in diesem Fall insbesondere monolithisch insbesondere aus demselben Material bestehen, wie die Rohrleitungen und mittels eines additiven Herstellungsverfahrens nahezu frei konstruierbar sind. Die offene Porosität des metallischen Schaums liegt dabei bevorzugt zwischen 20 % und 70 %, bezogen auf eine jeweilige Volumeneinheit. Der Vorteil dieses metallischen Schaums als Außenverkleidung der Rohrleitung besteht darin, dass in einem Kühlprozess kondensiertes Kühlmittel durch dieses offenporige Gebilde in flüssiger Form fließen kann und es an den Oberflächen des metallischen Schaums wiederum zu einer Verdampfung des Kühlmediums kommt, was der Rohrleitung und somit dem darin stattfindenden chemischen Prozess Wärmeenergie entzieht.

In einer weiteren Ausgestaltungsform der Erfindung durchdringt das Stützgitter den metallischen Schaum zur monolithischen Anbindung an die Außenwand der Rohrleitung lokal. Das bedeutet, dass dort, wo das Stützgitter mit seinen translatorisch verlaufenden Stützrippen den metallischen Schaum durchläuft, keine offenporige Porosität der beschriebenen Form vorliegt, sondern dass dort möglichst dichtes Material vorliegt, das so dicht ist, wie es das Fertigungsverfahren technologisch zulässt und das somit der bestimmungsgemäßen Wirkungsweise des Stützgitters entspricht.

In einer weiteren Ausgestaltungsform der Erfindung weist das Gehäuse eine mit diesem monolithisch verbundene und mit Fluidkanälen durchzogene Gehäuseabdeckung auf. Das bedeutet, dass das Gehäuse abgesehen von den technisch vorgesehenen Rohrleitungsöffnungen geschlossen ist und dass die Gehäuseabdeckung, da sie mit dem Gehäuse monolithisch verbunden ist, auch nicht abnehmbar ist. In die Gehäuseabdeckung, die ebenfalls mittels des additiven Herstellungsverfahrens dargestellt wird, sind im Weiteren bevorzugt Fluidkanäle angeordnet, sodass eine Temperierung des im Gehäuse insbesondere in den Rohrleitungen stattfinden chemischen Prozesses, über die Fluidkanäle der Gehäuseabdeckung gesteuert werden kann.

In einer weiteren vorteilhaften Ausgestaltungsform der Erfindung erweitert sich ein Innendurchmesser der Rohrleitung vom Rohrleitungseinlass zum Rohrleitungsauslass. Dies ist deshalb zweckmäßig, da sich ein Katalysatormaterial, das nach der Herstellung des Reaktors in die Rohrleitung eingebracht wird und zur Unterstützung der chemischen Reaktion dient, bei einem möglichen Aufquellen dieses Materials beim Katalysatorwechsel entlang der Rohrleitung das Entleeren des Katalysatormaterials ohne Verblockung ermöglicht und die Rohrleitung somit nicht verstopft wird. Die Erweiterung des Innendurchmessers der Rohrleitung trägt dabei über den gesamten Verlauf der Rohrleitung innerhalb des Reaktors zwischen 8 % und 21 % des Innendurchmessers bei der Eintrittsöffnung.

Der Innendurchmesser der Rohrleitung beträgt dabei über die gesamte Strecke der Rohrleitung innerhalb des Gehäuses des Reaktors zwischen 10 mm und 25 mm. Diese Abmessungen stellen einen guten Kompromiss zwischen einer kompakten Bauform des Reaktors und einem ausreichenden Reaktionsvolumen innerhalb der Rohrleitungen dar. In dieser kompakten Bauweise reiht sich auch das Stützgitter ein, wobei ein Querschnittsdurchmesser des Stützgitters üblicherweise zwischen 2 % und 10 % des Innendurchmessers der Rohrleitung beträgt.

Ein weiterer Bestandteil der Erfindung ist eine Kaskade von mindestens zwei monolithisch miteinander verbundenen Reaktoren nach einem der Ansprüche 1 bis 10, wobei mindestens ein Rohrleitungsauslass eines ersten Reaktors und ein Rohrleitungseinlass eines zweiten Reaktors durch eine Leitung in Verbindung stehen. Somit ist es möglich, in einem einzelnen Herstellungsverfahren mehrere aneinander gesetzte in Reihe geschaltete Reaktoren in einem Bauteil zu gestalten, was insbesondere bei kaskadierten Reaktion von gleichgewichtslimitierten Reaktionen zweckmäßig ist.

Des Weiteren ist ein Verfahren zur Herstellung eines Reaktors nach einem der Patentansprüche 1 bis 10 oder einer Kaskade nach Anspruch 11 Gegenstand der Erfindung. Das Verfahren zeichnet sich dadurch aus, dass es ein additives Herstellungsverfahren ist. Wie bereits bezüglich der Vorteile zu dem Reaktor und der Kaskade erläutert, stellt insbesondere ein additives Verfahren die Möglichkeiten bereit, komplexe Reaktoren, wie sie beschrieben sind, monolithisch darzustellen. Dabei eignet sich insbesondere ein Pulverbettverfahren gut. Das Pulverbettverfahren ist wiederum bevorzugt ein selektives Laserschmelzverfahren.

In einer anderen Ausgestaltungsform ist das additive Verfahren ein pastenbasiertes Sintermetallverfahren.

Ferner ist ein Computerprogramm zur Abbildung von Konstruktionsdaten des Reaktors bzw. der Kaskade nach einem der Ansprüche 1 bis 11 und/oder zur Steuerung eines Verfahrens nach einem der Ansprüche 12 bis 14 Bestandteil der Erfindung. Mittels eines solchen Computerprogramms, das auch als digitaler Zwilling ausgestaltet sein kann, kann der komplexe Aufbau des Reaktors und der komplexe Ablauf bzw. die Steuerung des Verfahrens, vorab elektronisch simuliert werden. Somit können auch Simulation der Wirkungsweise des Reaktors erfolgen, die dessen Effizienz erhöhen können. Ferner kann das angewandte additive Herstellungsverfahren bereits vorab simuliert werden, was die Ausschussrate reduziert.

Weitere Ausgestaltungsformen und weitere Merkmale der Erfindung werden anhand der folgenden Figuren näher erläutert. Merkmale mit denselben Bezeichnungen, jedoch in unterschiedlicher Ausgestaltungsform, werden dabei mit denselben Bezugszeichen versehen. Es handelt sich dabei um rein schematische Darstellungen, die keine Einschränkung des Schutzbereiches darstellen.

Dabei zeigen:
- Figur 1: einen schematisch vereinfachten Verfahrenslauf einer kaskadierten Reaktion zur Herstellung eines flüssigen Mediums,
- Figur 2: eine schematische Querschnittsdarstellung durch einen Reaktor,
- Figur 3: eine dreidimensionale Schnittdarstellung durch eine mögliche monolithische Reaktorbauform,
- Figur 4: eine vergrößerte Detaildarstellung der Rohrleitung und Gehäuse des Reaktors mit einem Stützgitter und
- Figur 5: einen Aufbau für die Durchführung eines Laserschmelzverfahrens.

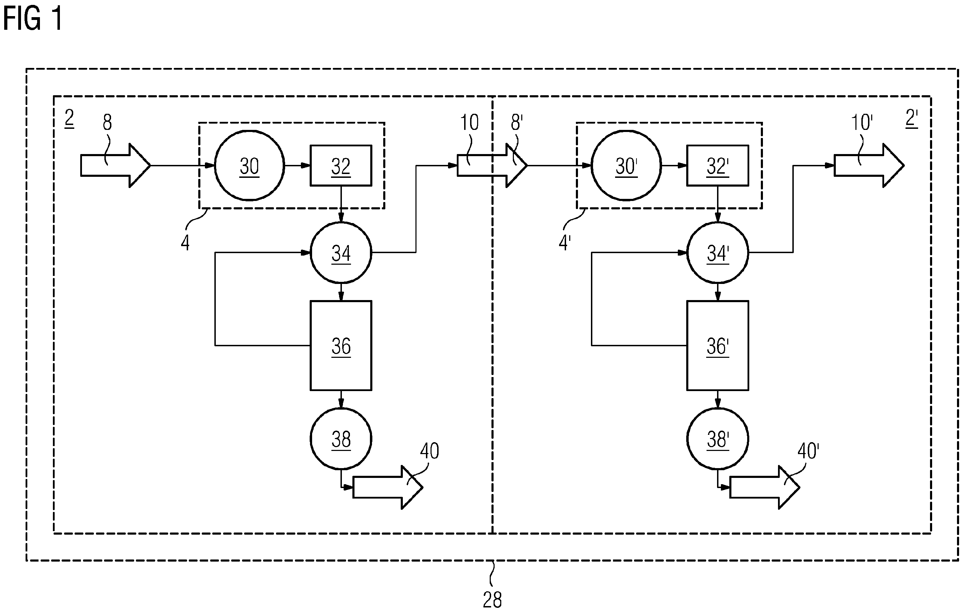

In Figur 1 ist ein schematischer kaskadierter Verfahrensablauf zur Herstellung eines chemischen Produktes, beispielsweise flüssiges Methanol aus gasförmigem Wasserstoff und gasförmigem Kohlenmonoxid oder gasförmigem Kohlendioxid, dargestellt. Um die schematische Verfahrensdarstellung in Figur 1 sind gestrichelte Kästen gezeichnet, wobei die beiden kleineren Kästen 2, 2', für die noch später zu erläuternden Reaktoren 2 und 2` stehen. Um die beiden Kästen 2, 2' ist eine Kaskade 28 von Reaktoren 2, 2' zusammenfassend dargestellt.

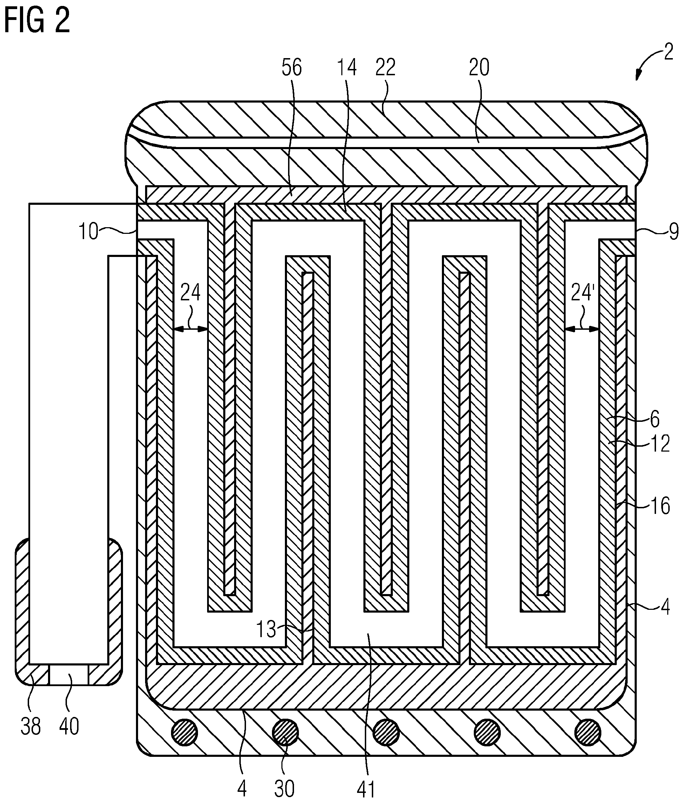

Gemäß der Reaktordarstellung in Figur 1 wird zunächst ein Gas durch einen Rohrleitungseinlass 8 in den Reaktor 2 eingebracht. Es erfolgt eine Vorwärmung bzw. Temperierung 30 des Gases in dem Reaktionsbereich 32. Dieser Reaktionsbereich 32 wird in den Figuren 2 bis 4 in Form von Rohrleitungen 6 ausgestaltet, in denen in einem betriebsbereiten Zustand des Reaktors 2 ein Katalysator 41 in Pulverform oder in granulierter Form vorliegt. Als ein Ausgangsgas wird in diesem Beispiel ein Gasgemisch von 75 % Wasserstoff und 25 % Kohlendioxid bei einem Druck zwischen 40 bar bis 150 bar- in die Rohrleitung 6, also in den Reaktionsbereich 32 eingeleitet. Durch Unterstützung des Katalysators 41 kommt es dabei zur Bildung von Methanol und Wasser, die unter diesen Bedingungen gasförmig vorliegen. Allerdings handelt es sich bei diesem Prozess um eine gleichgewichtslimitierte Reaktion, wobei das chemische Gleichgewicht auf der Seite der Edukte liegt. Das heißt, dass in der Regel unter den genannten Bedingungen ca. 20 bis 30 % des eingebrachten Gases zu dem gewünschten Methanol reagieren und 70 bis 80 % des Gases unreagiert als Ausgangsprodukte vorliegen. Daher ist es zweckmäßig, das während der Reaktion entstandene Methanol und Wasser aus dem Gemisch zu entfernen, wozu zunächst eine erste Kühlung 34 unter Ausbildung von flüssigem Kondensat erfolgt, daraufhin wird das unreagierte Ausgangsgas in einen Phasenabscheider 36 vom Kondensat abgeschieden, es erfolgt eine zweite Kühlung 38 des zurückbleibenden Kondensats aus Methanol und Wasser, das daraufhin als unterkühlte Flüssigkeit in einen Flüssigphasen-auslass 40 aus dem Reaktor 2 ausgeführt wird. Es sei darauf verwiesen, dass die Kühlung 34, der Phasenabscheider 36, die zweite Kühlung 38 in den Figuren 2 bis 4 nicht explizit dargestellt sind, was zur Vereinfachung der Beschreibung weiterer Reaktormerkmale dient.

Das aus dem Phasenabscheider ausgeschiedene unreagierte Gas wird jedoch über eine separate Leitung mittels eines Rohrleitungsauslasses 10 in den zweiten Reaktor 2` übergleitet und kommt dort in dem Rohrleitungseinlass 8` des zweiten Reaktors 2' an. Dort erfolgt die analoge Reaktion wie sie bereits zum Reaktor 2 beschrieben ist, sodass hierbei wiederum Methanol abgeschieden wird und das unreagierte Gas gegebenenfalls in einer weiteren Reaktion in einem hier nicht dargestellten dritten Reaktor erneut reagiert. Üblicherweise können bei solchen Kaskaden 2 bis 15 Reaktoren 2, 2' zweckmäßig sein, um die Ausbeute des ursprünglich eingeleiteten Eduktgases zu dem Reaktionsprodukt zu optimieren.

Bei der Beschreibung der Reaktion von Wasserstoff und Kohlendioxid zu Methanol gemäß Figur 1 handelt es sich lediglich um ein typisches Beispiel. Der in den weiteren Figuren beschriebene Reaktor 2 ist in der grundsätzlichen Bauform auf eine große Anzahl von chemischen Prozessen oder verfahrenstechnischen Prozessen anwendbar. Besonders gut ist der Reaktor in Form von Kaskaden 28 auf gleichgewichtslimitierte Reaktionen anwendbar.

In Figur 2 ist ein rein schematischer Querschnitt durch einen Reaktor 2 gegeben, der grundsätzlich dazu geeignet ist, das in dem Schaubild gemäß Figur 1 beschriebene Verfahren ablaufen zu lassen. Der Reaktor 2 weist dabei ein Gehäuse 4 auf, in dem die bereits erwähnte Rohrleitung 6 mäanderförmig verläuft. Der mäanderförmige Verlauf der Rohrleitung 6 dient dazu, in einem möglichst kompakten Gehäuse 4 einen möglichst langen Reaktionsweg zu beschreiben oder anders ausgedrückt, einen vom Gehäuse umschlossenen Innenraum 13 optimal auszufüllen. In der Rohrleitung 6 ist in einem prozessbereiten Zustand des Reaktors 2 der Katalysator 41 angeordnet. Ein Prozessgaseinlass ist in der Figur 2 nicht explizit dargestellt. Das Prozessgas, das nach dem Beispiel von Figur 1 Wasserstoff und Kohlendioxid ist, durchläuft dabei die Rohrleitung 6 und den darin befindlichen granulierten oder strangextrudierten Katalysatormaterial 41 und reagiert dabei zumindest teilweise zu Methanol und Wasser. Dieses Produktgemisch wird bei einem Rohrleitungsauslass 10 aus der heißen Temperaturzone des Reaktors herausgeführt, wobei der Kühler 38 die Wärmesenke für die Auskondensation darstellt, die im Flüssigphasen-Auslass 40 aus dem Reaktor 2 separiert werden. Wie in Figur 1 beschrieben, wird das unreagierte Gas in einer hier nicht dargestellten Leitung einem zweiten Reaktor 2' so zugeführt, dass der analoge Prozess, wie er in Figur 2 beschrieben ist, erneut ablaufen kann.

Dabei ist darauf zu verweisen, dass das Gehäuse 4 insgesamt geschlossen ist und eine Gehäuseabdeckung 22 aufweist, die mit dem Gehäuse 4 monolithisch verbunden ist und somit auch nicht abnehmbar ist. In der Gehäuseabdeckung 22 sind Fluidkanäle 20 enthalten, die zur Temperierung des Prozesses dienen. Ferner ist eine Vorheizung 30, die hier rein schematisch in dem Gehäuseboden dargestellt ist, angebracht. Diese dient dazu, den Reaktor auf die entsprechende Prozesstemperatur aufzuheizen. Die Fluidkanäle 20 wiederum dienen zur Kühlung, um ein in dem Gehäuse 4 außerhalb der Rohrleitungen 6 befindliches Kühlmedium 56 wieder zu verflüssigen. Das an der Gehäuseabdeckung 22 verflüssigte Kühlmedium 56 fließt nun durch einen metallischen Schaum 14, der um die Rohrleitung 6 herum angebracht ist, entlang der Rohrleitung 6 schwerkraftbedingt und bedingt durch Kapillarleitung der offenen Poren nach unten zu einem Boden des Gehäuses 4, wobei das verflüssigte Kühlmedium 56 während dieses Flusses an der Rohrleitung 6 in dem metallischen Schaum 14 erneut verdampft und damit Wärmeenergie von der Rohrleitung 6 und dem darin stattfindenden Prozess abführt.

Dieses Prinzip des Entlanglaufens des Kühlmittels 56 durch den metallischen Schaum 14 und des darin erneuten Verdampfens ist ebenfalls nicht auf das gemäß Figur 1 beschriebene Beispiel der Methanolerzeugung beschränkt. Es handelt sich hierbei um ein grundsätzliches Temperierungsprinzip für die Rohrleitungen 6. Durch den metallischen Schaum 14 wird eine, auf eine Volumeneinheit bezogene, zur Verfügung stehende Verdampfungsoberfläche um ein Vielfaches größer als dies bei einer glatten Oberfläche, wie beispielsweise eine Außenwand der Rohrleitung 6 der Fall ist. Somit kann durch den beschriebenen metallischen Schaum 14 eine bessere Wärmeabfuhr aus dem Reaktionsbereich, also aus der Rohrleitung 6 erfolgen, als dies bei herkömmlichen Reaktoren geschieht. Außerdem wird die thermische Spannung, die auf die Rohrleitung 6 wirkt, reduziert.

Das Kühlmedium 56 wird in einer ausreichenden Menge im Inneren des Gehäuses 4 vorgesehen, so dass im unteren Bereich eine stets vorhandene flüssige Phase bildet. Der die Rohrleitung 6 umgebende metallischen Schaum 14 berührt diese flüssige Phase, wodurch ständig durch Kapillarleitung die Rohrleitung 6 von der unteren Zone des Gehäuses her mit flüssigem Kühlmedium 56 befeuchtet wird. Der Innenraum wird ausschließlich mit Kühlmedium 56 befüllt und unter Vakuum verschlossen. In einer weiteren vorteilhaften Ausgestaltungsform erweitert sich ein Innendurchmesser 24 der Rohrleitung 6 in seinem Verlauf vom Rohrleitungsauslass 10 bis zum einem graphisch nicht dargestellten Rohrleitungsbeschickungsöffnung zwischen 8 % und 21 % des am Eingang vorliegenden, ursprünglichen Innendurchmessers 24. Der erweiterte Innendurchmesser 24 wird in Figur 2 mit dem Bezugszeichen 24' versehen. Dies hat die positive Wirkung, dass der Katalysator 41 die Rohrleitung 6 im Inneren beim Wechsel der Katalysatormasse nicht verstopfen kann, sondern beim mechanischen Entfernen entlang der Rohrleitung in Richtung des erweiterten Innendurchmessers 24' zur Rohrleitungsbeschickungsöffnung hin blockadefrei bewegen kann. Typischerweise handelt es sich hier um eine kompakte Bauform für den Reaktor 2 und der Innendurchmesser der Rohrleitung liegt dabei bevorzugt zwischen 10 mm und 25 mm. Die Wandstärke der Rohrleitung 6 beträgt dabei bevorzugt zwischen 0,5 mm und 2 mm, besonders bevorzugt zwischen 0,8 mm und 1 mm. Die Wandstärke des Gehäuses 4 ist dabei jedoch stärker ausgestaltet und liegt bevorzugt in einem Bereich zwischen 3 mm und 12 mm, besonders bevorzugt in einem Bereich zwischen 5 und 10 mm.

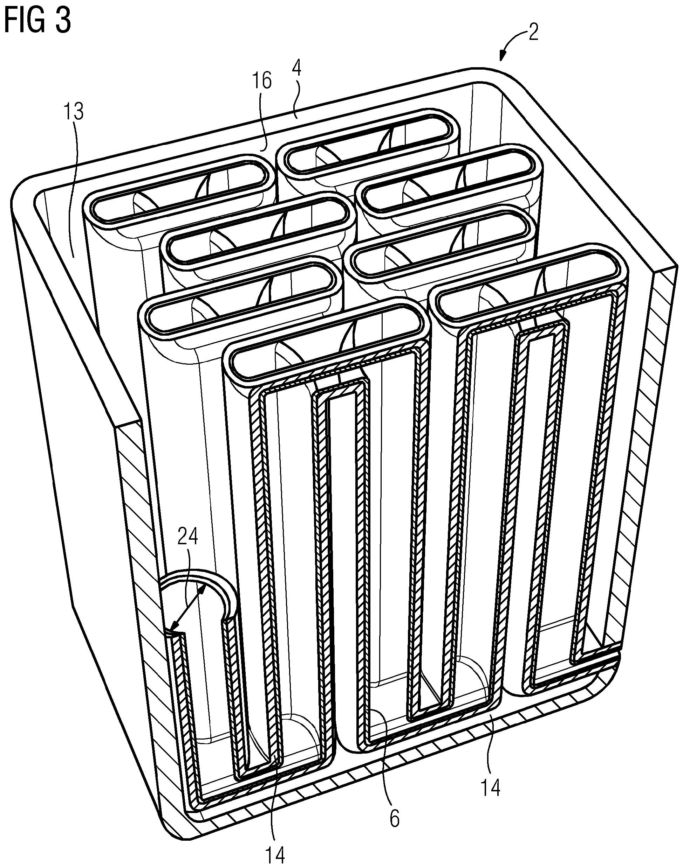

Aufgrund der beschriebenen konstruktiven Ausgestaltung des Reaktors 2 bzw. der Kaskade 28 ist ersichtlich, dass es sich um sehr komplexe Konturen handelt, die durch herkömmliche Herstellungsverfahren von metallischen Bauteilen kaum oder nur mit extrem hohem, unwirtschaftlichem Aufwand zu bewerkstelligen sind. Aus diesem Grund ist der Reaktor 2 bzw. die Kaskade 28 durch ein additives Herstellungsverfahren ausgestaltet. In Figur 3 ist eine, ebenfalls schematische dreidimensionale Darstellung des Reaktors 2 gegeben, wie er auch bereits in Figur 2 schematisch dargestellt ist. Hierbei ist zu erkennen, dass der mäanderförmige Verlauf der Rohrleitung 6 nicht nur zweidimensional ist, sondern innerhalb des Gehäuses 4, also im Innenraum 13 des Gehäuses 4, Kehrtwendungen vollzieht und in einer weiteren Mäanderschleife weiterverläuft. Auf diese Weise wird der Innenraum 13 optimal für die Reaktion genutzt. In Figur 3 ist in der dreidimensionalen Darstellung der Schaum 14 gezeigt, der dazu geeignet ist, das Kühlmedium 56 wie beschrieben zu leiten.

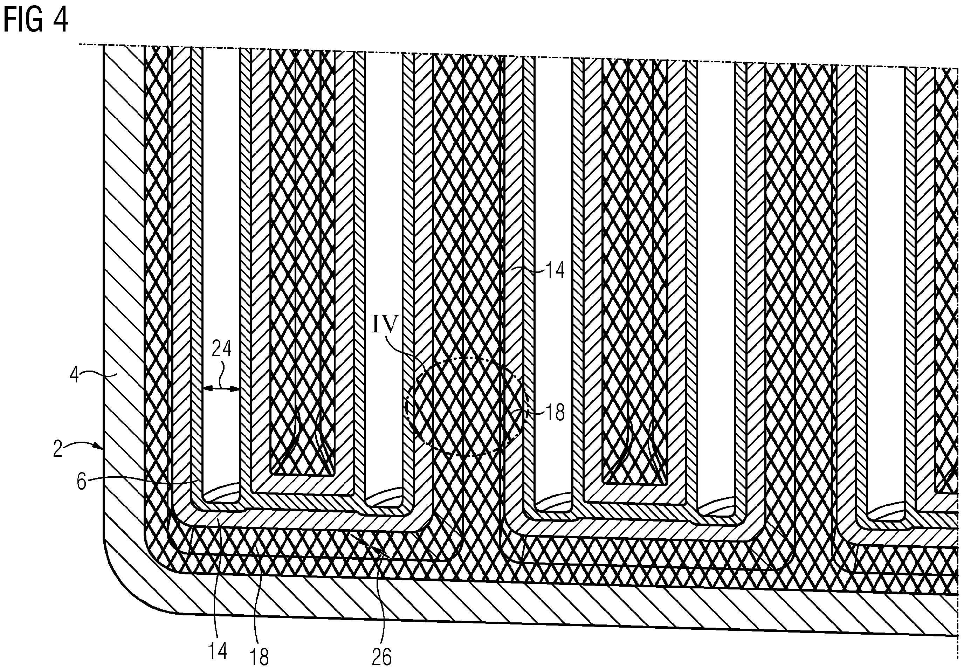

Bei den Dimensionen der Rohrleitung 6, sowohl von ihrem Durchmesser als auch von ihrer Wandstärke, handelt es sich um eine sehr kompakte Bauform. Bei den hohen Drücken und bei den hohen Temperaturen (üblicherweise 150 bar Innendruck in der Rohrleitung 6 bei einer Temperatur von etwa 250 °C) tritt eine sehr hohe thermische und mechanische Belastung auf die Rohrleitung 6 auf. Daher ist eine, wie in Figur 4 dargestellte Stützgitter-Struktur 18 vorgesehen, die zur Vereinfachung der Darstellung in Figur 3 nicht gezeigt ist. Das Stützgitter 18 erstreckt sich dabei von einer Gehäuseinnenwand 16 des Gehäuses 4 durch den Innenraum 13 zur Außenwand 12 der Rohrleitung 6. Ferner erstreckt sich das Stützgitter 18 auch bevorzugt zwischen den einzelnen Außenwänden 12 der Rohrleitung 6, um die Rohrleitung 6 bezüglich des Gehäuses 4 aber auch in ihrer Positionierung zueinander auf ihrem mäanderförmigen Weg durch den Gehäuseinnenraum 13 abzustützen. Zur optimalen Stützwirkung verläuft das Stützgitter 18, wie in dem kreisförmig gestrichelten Ausschnitt mit der Bezeichnung IV in Figur 4 dargestellt ist, auch durch den Schaum 14 monolithisch. Dabei ist das Stützgitter 18 sowohl monolithisch mit dem Gehäuse 4 und der Rohrleitung 6 verbunden. In den Bereichen, in denen das Stützgitter 18 den Schaum 14 durchdringt, liegt trotzdem in dem Schaum 14 keine Porosität vor, vielmehr ist das Stützgitter 18 mit seiner entsprechend der Prozesstechnik möglich verdichteten Form ausgestaltet. Der metallische Schaum 14 weist in den übrigen Bereichen bevorzugt eine Porosität auf, die zwischen 20 % und 70 % bezogen auf eine entsprechende Volumeneinheit beträgt.

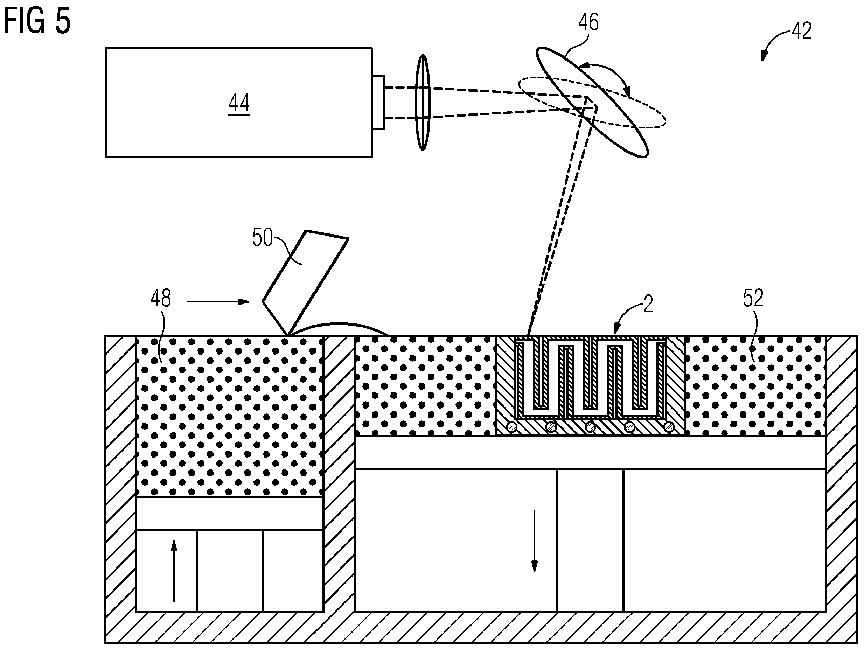

Bei dem beschriebenen Reaktor 2 bzw. der Kaskade 28 von mindestens zwei Reaktoren 2, 2' handelt es sich um ein mittels eines additiven Herstellungsverfahrens hergestelltes Bauteil. Grundsätzlich können eine Mehrzahl verschiedener additiver Verfahren die komplexe Struktur des beschriebenen Reaktors 2 darstellen. Ein besonders geeignetes Verfahren, das sogenannte selektive Laserschmelzverfahren, wird gemäß Figur 5 schematisch erläutert. Hierzu wird ein Pulverbett 52 bereitgestellt, in dem das herzustellende Bauteil, in diesem Fall der Reaktor 2, sukzessive aufgebaut wird. Hierzu wird ein Laser 44 mittels einer Optik 46 so umgelenkt, dass der Laserstrahl auf einen vordefinierten Punkt im Pulverbett 52 trifft und dabei das darin befindliche Pulver lokal aufschmilzt und verfestigt. Dieser Verfestigung kann dabei mittels eines direkten Schmelzvorgangs oder eines lokalen Sintervorgangs erfolgen. Ob sich nun ein Schmelzprozess oder ein diffusionsgesteuerter Sinterprozess einstellt, hängt von der Dauer der Laserbelichtung und der Energie in gewählten Vorgang ab.

Das mit Metallpulver komplett gefüllte fertige Bauteil wird eine geeignete Bewegungsfolge mittels Schwerkraft entleert.

Die Prozessparameter für die Steuerung des Lasers werden anhand eines CAD-Modells des herzustellenden Reaktors 2, wie es in Figur 3 zumindest schematisch dargestellt ist, ermittelt und mittels eines Softwareprogrammes (Computerprogramm) zur Steuerung des Lasers umgewandelt. Zur Versorgung des Pulverbetts 52 mit zusätzlichem Pulver ist in dieser Ausgestaltungsform ein Pulvervorrat 48 vorgesehen, wobei mittels eines Rakels 50 weiteres Pulver in das Pulverbett 52 transportiert wird, sodass sukzessive der Reaktor 2 mittels des selektiven Laserschmelzens in der Form aufgebaut werden wird, wie er in Figur 3 und detaillierter in Figur 4 dargestellt ist.

Insbesondere die komplexe Ausformung des metallischen Schaums 14, der eine sehr große offene Porosität zur Verdampfung des Kühlmediums 56 aufweist, sowie die Stützstruktur 18, jedoch auch der sich erweiternde Rohrinnendurchmesser 24 der Rohrleitung 6 und die massive drucktragende Wand des Gehäuses 4, erfordern dabei in jeder Ebene des aufzubauenden Reaktors 2 unterschiedliche Laserparameter. Diese können die Lasergeschwindigkeit, der sich verändernde Winkel des Lasers in jeder Lage sowie die Erweiterung des Abstandes zwischen den Laserbahnen, den sogenannten Hatch, sein. Auch die Lasergeschwindigkeit und dessen Leistung sind dabei für den Aufbau und die individuellen Anforderungen an die Bauteilgeometrie des Reaktors variabel.

Daher ist es zweckmäßig, dass das Computerprogramm in Form eines digitalen Zwillings ausgestaltet ist, in dem sowohl eine virtuelle Abbildung des Reaktors an sich und des additiven Herstellungsverfahrens sowie die Steuerung des additiven Herstellungsverfahrens vorliegen.

### Bezugszeichenliste

- 2: Reaktor
- 4: Gehäuse
- 6: Rohrleitung
- 8: Rohrleitungseinlass
- 10: Rohrleitungsauslass
- 12: Außenwand Rohrleitung
- 13: Innenraum Gehäuse
- 14: metallischer Schaum
- 16: Gehäuseinnenwand
- 18: Stützgitter
- 20: Fluid
- 22: Gehäuseabdeckung
- 24: Innendurchmesser Rohrleitung
- 26: Durchmesser Stützgitter
- 28: Kaskade
- 30: Vorheizung
- 32: Reaktionsbereich
- 34: erste Kühlung
- 36: Phasenabschneider
- 38: zweite Kühlung
- 40: Flüssigphasen Auslass
- 41: Katalysator
- 42: Pulverbett basiertes Verfahren
- 44: Laser
- 46: Optik
- 48: Pulvervorrat
- 50: Rakel
- 52: Pulverbett
- 54: Bauteilplattform
- 56: Kühlmedium

## Patentansprüche

1. Additiv hergestellter metallischer Reaktor (2) mit einem Gehäuse (4) und mindestens einer in dem Gehäuse (4) angeordneten Rohrleitung (6), wobei das Gehäuse (4) und die Rohrleitung (6) monolithisch miteinander verbunden sind, und das Gehäuse (4) mindestens einen Rohrleitungseinlass (8) und einen Rohrleitungsauslass (10) aufweist
**dadurch gekennzeichnet, dass** in einem Innenraum (13) des Gehäuses (4) zwischen einer Gehäuseinnenwand (16) und einer Außenwand (12) der Rohrleitung (6) ein mit beiden Wänden monolithisch in Verbindung stehendes Stützgitter (18) angeordnet ist.

2. Reaktor nach Anspruch 1, **dadurch gekennzeichnet, dass** die Rohrleitung (6) an der Außenwand (12) monolithisch von einem offenporigen metallischen Schaum (14) - umgeben ist.

3. Reaktor nach Anspruch 2, **dadurch gekennzeichnet, dass** das Stützgitter (18) den metallischen Schaum (14) zur monolithischen Anbindung an die Außenwand (12) der Rohrleitung (6) lokal durchdringt.

4. Reaktor nach einem der vorhergehenden Ansprüche, **dadurch gekennzeichnet, dass** das Gehäuse (4) eine mit diesem monolithisch verbundene und mit Fluidkanälen (20) durchzogene Gehäuseabdeckung (22) aufweist.

5. Reaktor nach einem der vorhergehenden Ansprüche, **dadurch gekennzeichnet, dass** sich ein Innendurchmesser (24) der Rohrleitung (6) vom Rohrleitungsauslass (10) zum Rohrleitungseinlass (8) oder zu einem Rohrleitungsbeschickungszugang erweitert.

6. Reaktor nach Anspruch 5, **dadurch gekennzeichnet, dass** die Erweiterung des Innendurchmessers (24) zwischen 8 % und 21 % beträgt.

7. Reaktor nach einem der vorhergehenden Ansprüche, **dadurch gekennzeichnet, dass** die Rohrleitung (6) im Gehäuse mäanderförmig verläuft.

8. Reaktor nach einem der vorhergehenden Ansprüche, **dadurch gekennzeichnet, dass** ein Innendurchmesser (24) der Rohrleitung zwischen 10 mm und 25 mm beträgt.

9. Reaktor nach einem der vorhergehenden Ansprüche, **dadurch gekennzeichnet, dass** ein Querschnittdurchmesser (26) des Stützgitters (18) zwischen 2 % und 10 % des Innendurchmessers (24) der Rohrleitung (6) beträgt.

10. Reaktor nach einem der vorhergehenden Ansprüche **dadurch gekennzeichnet, dass** die offene Porosität des metallischen Schaums zwischen 20 % und 70 % einer Volumeneinheit beträgt.

11. Kaskade (28) von mindestens zwei monolithisch miteinander verbundenen Reaktoren (2) nach einem der Ansprüche 1 bis 10, wobei mindestens ein Rohrleitungsauslass (10) eines ersten Reaktors (2) und ein Rohrleitungseinlass (8`) eines zweiten Reaktors (2`) durch eine Leitung in Verbindung stehen.

12. Verfahren zur Herstellung eines Reaktors (2) nach einem der Ansprüche 1 bis 10 oder einer Kaskade (28) nach Anspruch 11, **dadurch gekennzeichnet, dass** das Verfahren ein additives Herstellungsverfahren ist.

13. Verfahren nach Anspruch 12, **dadurch gekennzeichnet, dass** das Verfahren ein Pulverbettverfahren ist.

14. Verfahren nach Anspruch 13, **dadurch gekennzeichnet, dass** das Verfahren ein selektives Laser-Schmelz-Verfahren oder ein pastenbasiertes Sintermetallverfahren ist.

15. Computerprogramm zur Abbildung von Konstruktionsdaten des Reaktors nach einem der Ansprüche 1 bis 11 und/oder zur Steuerung eines Verfahrens nach einem der Ansprüche 12 bis 14.
